# EUROPEAN PATENT APPLICATION

(11) **EP 2 905 264 A1**
(43) Date of publication of application: **12.08.2015**
(21) Application number: 14154501.2
(22) Date of filing: 10.02.2014
(51) Int. Cl.: C02F 1/52, C02F 103/28

(54) **Method of treatment of the effluents of coating**

(71) Applicant: ABB France, 91978 Courtaboeuf Cedex (FR)
(72) Inventor: REY, Pascal, 73000 SONNAZ (FR)
(74) Representative: Chevalier, Renaud Philippe

(57) **Abstract**

The invention concerns a method of treatment of the effluents of coating from paper-making industry, said method comprises the following steps:
a) mixing of the effluents of coating with at least one coagulant agent which is a polymer chosen in the group constituted by the polyaluminium chlorides until obtaining by coagulation a mixture which comprises agglomerates ;
b) performing a separation treatment on the mixture obtained in step a) to recover :
- a concentrate containing the mineral and organic solid components that were present in the coating colour ;
- a filtrate.

## Description

The present invention relates to a method of treatment of the effluents produced during the process of coating in paper-making industry in order to recycle the obtained concentrate of organic and inorganic solid components which were initially present in the coating colour used for coating.

The purpose of coating paper is to improve its printing, brightness and appearance properties. In particular, opacity, brightness and gloss are important parameters which can be affected by coating.

The process of coating is carried out by applying a coating colour (i.e. a usually white coating paste) which is an aqueous suspension of mineral and organic solid components onto a paper web at a coating station in a paper machine.

In principle, the coating colour comprises four categories of components :
a) one or more inorganic components chosen amongst the pigments such as kaolins, clays, carbonates (for example calcium carbonate), talcum, gypsum, and other inorganic components chosen amongst titanium dioxide, aluminium hydrate and calcined clays;
b) one or more binders, i.e. natural organic binders such as casein, native starch or transformed starch or synthetic binders such as latexes, styrene-butadiene rubber (i.e. SBR) polyvinyl acetate or styrene-acrylate copolymer ;
c) one or more viscosity regulating agents (carboxy-methyl cellulose (i.e. CMC), protein, polyvinyl alcohol (i.e. PVA) ;
d) various additives.

The function of the pigments is to improve opacity and surface properties of paper. The coating colour typically contains 85 to 95% of pigment by weight, calculated on the total weight of the dry substance. In a typically aqueous coating colour suspension, the inorganic solid components represent 40%, often 60% or more, by weight of the total weight of organic and inorganic solid components.

The function of the binders is to attach the pigments to the surface of the paper and to bond the pigment particles to each other. The coating colour typically contains 5 to 15% of binders by weight, calculated on the total weight of the dry substance. The latexes which are water-insoluble polymers in the aqueous suspension of coating colour are minor components, preferably 5% by weight or less, often below 2% by weight, of the total weight of the water-insoluble organic components.

According to the present invention, the term "the dry substance" is to be understood as covering all the organic and inorganic solid components that are present in a coating colour, an effluent of coating colour or a diluted coating colour.

The additives are for example colouring agents, antislime agents, synthetic dispersion binders and auxiliary materials (for example optical brighteners, thickening agents, dispersing agents, etc). Their content in the coating colour is approximately 1% or less by weight, calculated on the total weight of inorganic and organic solid components.

The compositions of the coating colour may further comprise minor additives (for example lubricants, rheology modifiers, pigmented dyes, antifoam, biocides, barrier agents, water retention agents).

The aqueous suspension of a coating colour has typically a total content of solid components (i.e. inorganic and organic solid components) of less than 10%, more preferably less than 5%, generally in the range of 0,5 to 5% by weight, calculated on the total weight of the aqueous suspension of the coating colour.

The composition of the coating colour will depend on the demands for paper quality. Thus, various organic and inorganic components are used for the preparation of the coating colour depending on the desired properties such as pick resistance and wet strength, uniform colour tone, absorbency, opacity, white level, smoothness and gloss.

The preparation of the coating colour is carried out as following: the individual components of the coating colour are measured out, for example into a special mixing unit, and then they are mixed intensively in water.

The quantity of effluents produced during the coating is important in paper-making processes, because the consumption of the coating colour is considerable. More precisely, the total quantity of effluents produced during coating, i.e. in particular generated by the washs of the circuits of preparation of the coating colour and by the washs of the coating heads may be comprised between 10 and 250 m³ per day for a dayly production of a coating colour, expressed in dry substance, comprised between 50 and 500 tons.

Moreover, the quantity of the coating colour that is passed with the effluents is approximately 1 to 3% dry weight, calculated on the total dry weight of the coating colour that is used for carrying out the coating. A typical paper mill using coating processes may have to dump several tons of coating colour per day.

Furthermore, the effluents of coating are highly polluting, because the coating colour comprises latexes, polyvinylalcohol or titanium dioxide that are well-known as pollutants. Thus, the discharging of the effluents of coating into sewer system is forbidden or at least strictly regulated. The effluents of coating have to be dumped, generally landfilled. Thus, in paper-making industry, the treatment of the effluents of coating are usually performed at the mill site. It often consists in conventional effluent treatment.

The conventional treatments of the effluents of coating may involve separation of all the solids together from the liquid (i.e. the aqueous liquor), for example by coagulating all the solids, often using chemicals such as alum as a coagulant.

After a treatment of separation of the coagulated solids from the liquid, the coagulated solids may be transported to a dump or they may be recycled in an industrial application, for example during the process of paper-making. The recovered liquid may be recycled, discharged or subjected to a further treatment for example in a sewage treatment plant.

However, these conventional treatments of the effluents of coating have the disavantage not to carry out an efficiently separation of the reusable (i.e. recycable) organic and inorganic solid components that were contained in the coating colour from the remainder liquid. In other words, some of the recycable organic and inorganic solid components that may be reused in an industrial application such as a paper-making process are lost in the liquid that is discharged or subjected to a traditional waste water treatment.

It is furthermore known in the art to reuse the waste of coating-colour by wet combustion in order to produce energy. However, wet combustion involves high apparatus and operating expenses.

Moreover, it is well-known to filter by ultrafilration the effluents of coating to recover the components of the coating colour in the form of a concentrate. The concentrate recovered by ultrafiltration can be recycled to the process of coating by adding it into a fresh coating colour. However, ultrafiltration involves several problems. Indeed, an ultrafiltration apparatus is expensive both as an investment and with respect to its maintenance.

It would be desirable to treat efficiently and economically the effluents produced during the coating in paper-making processes so as to recover from these effluents as much as possible the mineral and organic solid components that were contained in the coating colour in order to recycle them, for example by reincorporating them into a fresh coating colour. It is further an object of the present invention to eliminate the drawbacks above mentioned of the known conventional treatments of wastes of coating and without incurring high apparatus costs.

It is specifically an object of the invention, to provide a novel method of treatment of the effluents produced during the process of coating in paper-making industry, said effluents containing diluted coating colour which comprises an aqueous suspension of mineral and organic solid components, said method is characterized in that it comprises the following steps :
a) mixing of the effluents of coating with at least one coagulant agent which is a polymer chosen in the group constituted by the polyaluminium chlorides until obtaining by coagulation a mixture which comprises agglomerates ;
b) performing a separation treatment on the mixture obtained in step a) to recover :
   - a concentrate containing the mineral and organic solid components that were present in the coating colour ;
   - a filtrate.

In an embodiment of the invention, before the step b) of performing a separation treatment, a further step a') is carried out, said step a') consists in mixing the mixture containing the agglomerates formed in step a) with at least one flocculant agent which is a polymer chosen in the group constituted by the polyvinylamines until obtaining by flocculation a mixture which comprises flocs. And then, the step b) is normally carried out on the mixture obtained in step a').

In other words, in this embodiment of the invention, the method of treatment of the effluents produced during the process of coating in paper-making industry may be characterized in that it comprises the following steps :
a) mixing of the effluents of coating with at least one coagulant agent which is a polymer chosen in the group constituted by the polyaluminium chlorides until obtaining by coagulation a mixture which comprises agglomerates ;
a') mixing the mixture containing the agglomerates formed in step a) with at least one flocculant agent which is a polymer chosen in the group constituted by the polyvinylamines until obtaining by flocculation a mixture which comprises flocs;
b) performing a separation treatment on the mixture obtained in step a') to recover :
   - a concentrate containing the mineral and organic solid components that were present in the coating colour ;
   - a filtrate.

According to the present invention, the term "coagulation" is to be understood as covering a chemical treatment in which organic and inorganic solid components (i.e. dispersed colloidal particles) are in suspension in the diluted coating colour agglomerate.

According to the present invention, the term "flocculation" is to be understood as covering a chemical treatment wherein the agglomerated organic and inorganic solid components come out of suspension of coating colour in the form of flocs due to the addition of a flocculant agent (i.e. a polymer chosen amongst the polyaluminium chlorides).

Thus, the method of treatment of the invention comprises a chemical treatment, i.e. steps a), and optionally a') which is followed by a physical treatment, i.e. step b).

In a preferred embodiment of the invention, the step a') is carried out when the concentration of solid components (i.e. inorganic and organic solid components) present in the effluents of coating colour is at least 10g/L, said concentration being determined on the total weight of the effluents of the coating colour.

Preferably, the physical treatment is a decantation.

Indeed, the inventors of the present invention have surprisingly discovered that the specific combination of the use of a coagulant agent as described above, optionally followed by the use of a flocculant agent as described above, induce a very efficiently recovering of the inorganic and organic solid components that are present in the effluents of coating.

More precisely, the concentrate contains 98 to 99,5% of the total weight, expressed in dry substance, of the inorganic and organic solid components that were present in the effluents of coating. In other words, the recovering rate of the inorganic and organic solid components according to the method of treatment of the present invention is between 98 to 99,5%.

The recovered filtrate contains minor soluble agents that were present the coating colour. The recovered filtrate may be recycled, discharged or subjected to a further treatment, for example in a sewage treatment plant to obtain a clarified water.

Thanks to the method of treatment of the invention, the recovered filtrate has a chemical oxygen demand (hereafter abbreviated as "COD"), a biochemical oxygen demand (hereafter abbreviated as "BOD") and a biochemical oxygen demand of wastewater during decomposition occurring over a 5-day period (hereafter abbreviated "BOD5") lower than the ones of the effluents of coating. In other words, the method of treatment has the advantage to reduce the COD, BOD and the BOD5 of the effluents of coating. That is particularly advantageous for transfering the recovered filtrate to a traditional sewage plant.

According to the present invention, the term "COD" is to be understood as a test to measure the amount of organic compounds in water and so to determine the water quality. It is expressed in milligrams per liter (mg/L) also referred to as ppm (parts per million), which indicates the mass of oxygen consumed per liter of solution.

According to the present invention, the term "BOD" is to be understood as the amount of dissolved oxygen needed by aerobic biological organisms in a sample of water to break down organic material present in the sample at certain temperature over a specific time period. The BOD value is most commonly expressed in milligrams of oxygen consumed per litre of sample during 5 days of incubation at 20 °C.

The recovered concentrate of inorganic and organic solid components may be used for an industrial application, preferably for a paper-making process, and most preferably for a coating process.Thus, another object of the present invention is the use of the recovered concentrate in step c) of the method of treatment in paper-making process, preferably in a coating process. In other words, the recovered concentrate of organic and inorganic solids components is used to be reincorporated into a fresh coating colour.

Thanks to the method of treatment of the effluents of coating of the present invention, the reuse (i.e. the recycling) of the recovered solid components of effluents of coating colour into a fresh coating colour reduces the costs of coating colour and thus increases the gains in paper-making industry.

Moreover, the method of treatment of the present invention has the advantage of reducing the quantity of wastes that has to be carried to dumps, as well as the waste handling costs on the whole.

The method of treatment of the present invention has the further advantage to be implemented by using existing apparatus of treatment of effluents that may be present on the site of a paper-making mill.

The method of treatment of effluents of coating according to the present invention is described more in detail.

As explained above, the aqueous suspension of coating colour has typically a total content of solid components (i.e. inorganic and organic solid components) of less than 10%, preferably in the range of 0,5 to 5% by weight, calculated on the total weight of inorganic and organic solid components of the effluents of coating, i.e. in other words calculated on the weight of the dry substance.

In step a) of the method of treatment, the aqueous suspension of the coating colour has a content of total solid components (i.e. inorganic and organic solid components) that is less than 10%, preferably in the range of 0,5 to 5% by weight, calculated on the total weight of the aqueous suspension of the coating colour. Thus, the aqueous suspension of the coating colour that is to be treated should be diluted to such a concentration (if it is not already at such a concentration) before carrying out the step a) of the method of treatment.

The effluents of coating of step a) may come from the washing of the unit of the preparation of the coating colour where they are stored every day. The storage of the effluents of coating is usually performed at ambient temperature (i.e. about 25°C).

During the step a) of the method of treatment, a neutralization of the repulsive anionic surface charges between the dispersed colloids (i.e. the dispersed organic and inorganic solid components contained in the effluents of the coating colour) is performed so that the aqueous suspension is destabilized which allows the formation of agglomerates by coagulation.

The coagulant agent of step a) is chosen amongst the polyaluminium chlorides.

Preferably, the coagulant agent is the polyaluminium chloride marketed under the tradname "PAX-18" by the company KEMIRA WATER SOLUTIONS, Inc.

The PAX-18 is in liquid form (yellowish). Its content of Al₂O₃ is about 17,1% ±0,4% and its basicity is about 42 ±2%.

The PAX-18 has the further properties :
- content of aluminium : 9% ±0,2%
- content of iron : less than 0,01 %
- specific gravity (25°C) : 1,37±0,03
- pH: 0,9 ±0,3
- active material :3,33 moles/kg
- viscosity (25°C) : 30 ±5 cP
- freezing point : -20°C
- density : 1,36
- concentration of the polymer by weight, calculated on the total weight of the solution : 30-40%.

The step a) of the method of treatment may be carried out in a first mixer. The first mixer is equiped of vertical agitator with propeller allowing an appropriate and continuous homogenization of the effluents of coating with the coagulant agent.

In a preferred embodiment of the invention, the concentration of the solid components of the effluents of coating is controlled, preferably continuously, for example by using a mass flowmeter, so that a determined quantity of the coagulant agent is mixed with the effluents so that to allow the formation of agglomerates. In other words, the quantity of the coagulant agent is adjusted according to the concentration of solid components present in the effluents of coating to be treated.

The control of the concentration of the effluents may be carried out in a storage tank before their introducing into the first mixer.

The quantity of the coagulant agent may be comprised between 1% and 3% of the total weight, calculated on the total weight of the mineral and organic solid components (i.e. the dry substance) of the effluents of coating.

In a preferred embodiment of the invention, the effluents of coating are filtered (for example with a filter fineness of 250µm) before being introduced into the first mixer for the carrying out of step a). The step of filtering, preferably by using a vibrating filter, allows the elimination of contaminants such as synthetic and cellulosic fibers before the carrying out of the above detailed steps of treatment.

During step a') of the method of treatment, the agglomerated formed in step a) agregate into larger settling flocs. Indeed, the agglomerates formed in step a) may have a size comprised between about 0,1 µm and about 1 µm and the flocs formed in step a') have a size that may be comprised between about 10 µm and about 100 µm.

The step a') of the method of treatment may be carried out in a second mixer.

The flocculant agent of step a') is chosen amongst the polyvinylamines.

Preferably, the flocculant agent is the polymer marketed under tradname of POLYMIN® VZ by the company BASF. POLYMIN® VZ is a medium-molar-mass water-soluble polyvinylamine based dispersion polymer. Its charge is cationic. The POLYMIN® VZ has the further properties:
- physical form : white, milky aqueous dispersion;
- bulk density: 1,10 g/cm³
- solid content higher than 43%
- viscosity (measured with Brookfield viscometer) : 1500-4000 mPa.s
- pH: 2,0-5,0
- crystallization temperature : 0°C
- concentration of the polymer by weight, calculated on the total weight of the solution : 48%.

The quantity of the flocculant agent depends on the concentration of the solid components contained in the effluents of coating.

The quantity of the flocculant agent may be comprised between 0,5% and 1% by weight, calculated on the total weight of the mineral and organic solid components (i.e. the dry substance) of the effluents of coating.

In step b), the separating treatment that is preferably a decantation may be carried out by using a centrifugal separator or a plate or lamellar clarification apparatus. These apparatus have the advantage to accelerate the decantation. Other conventional techniques of separating the flocs from the remainder of the suspension may be used.

Preferably, step b) is carried out in a centrifuge. More preferably, the centrifugation is carried out at high speed, preferably between 1500 and 3500 rotation per minute, so that the separation of the flocs from the remainder of the suspension is obtained quickly. The debit of the centrifuge may be comprised between 1 m³/hour and 15 m³/hour. The use of a centrifuge has the further advantage to save the costs of energy.

The method of treatment according to the present invention may further comprise a step c) which consists in adjusting the concentration of the concentrate recovered in step b) to a determined value that is appropriate for reusing the concentrate, for example by reintroducing it into a fresh coating colour. The adjustment may consist in a dilution of the concentrate.

Thus, in case of recycling of the recovered concentrate into a fresh coating colour, the concentration of the total solid components of the concentrate may be adjusted, for example by dilution, so that said concentration of the total solid components represents 30% by weight.

This adjustment may be carried out continuously by using a dynamic mixer with a mass flow controller. After the adjustment of its concentration, the concentrate may be stored in a recovery tank before its reusing.

Another object of the invention is the use of the concentrate recovered in step b) of the method of treatment described above for paper-making process. Preferably, the paper-making process is coating.

Another object of the invention is an industrial plant for carrying out the above described method of treatment, said industrial plant comprises:
- a first unit for dosing the coagulant agent ;
- a second unit for controlling the concentration of effluents of coating ;
- a first mixer for mixing the effluents of coating with the coagulant agent to obtain a mixture;
- optionally, a third unit for dosing the flocculant agent;
- optionally, a second mixer for mixing the flocculant agent with the mixture;
- a means of separation for recovering the concentrate and the filtrate.

The method of treatment of the invention is illustrated by the following examples.
The invention is described in the following, in detail, with the aid of an embodiment example, referring to the attached drawing, wherein :
Figure 1 presents, schematically, a unit for carrying out the method of treatment of the effluents of coating.
Figure 2 is the graph of the viscosity as a function of shear stress for different pre-coat compositions.

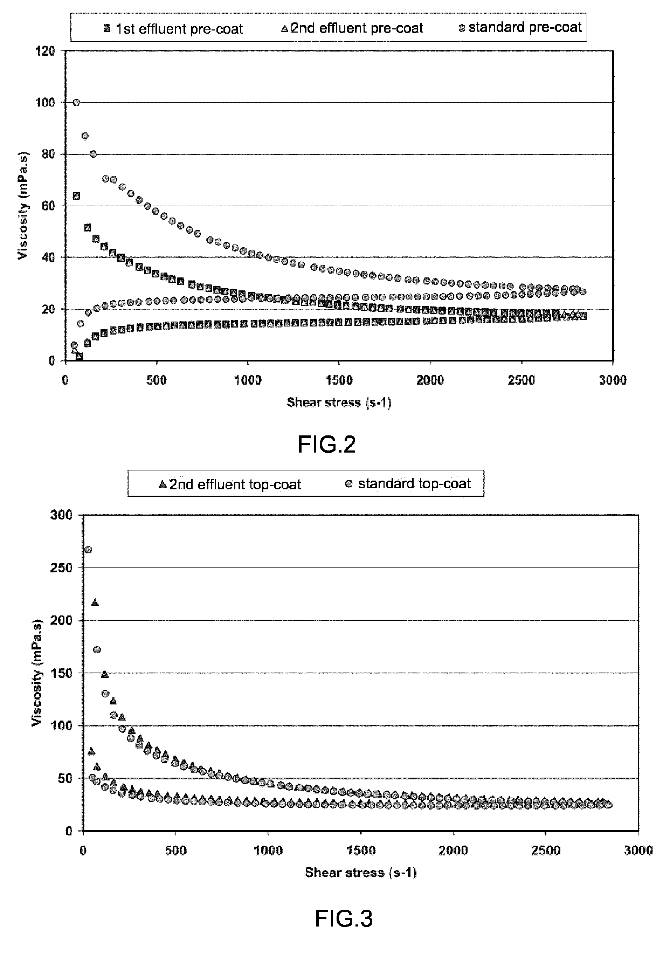

Figure 2 is the graph of the viscosity as a function of shear stress for different top-coat compositions.

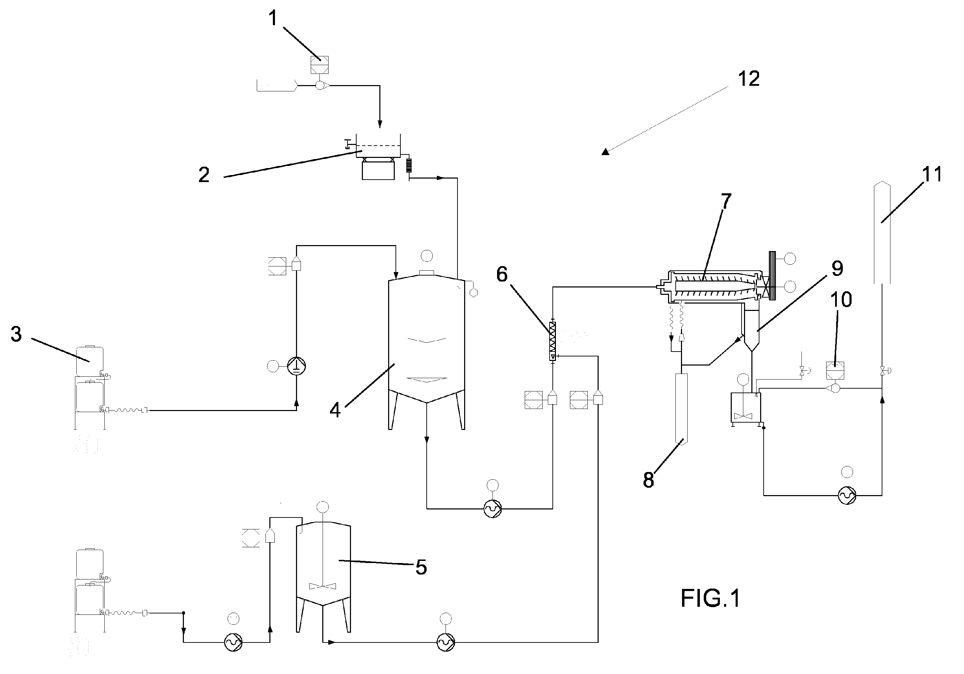

Figure 1 schematically shows an industrial plant 12 for carrying out the method of treatment of the present invention. The industrial plant comprises an unit 3 for dosing and monitoring the coagulant agent to be introduced into the first mixer 4. The concentration of effluents of coating to be treated is controlled in the unit 1. The effluents of coating are filtered by a filter 2. The effluents of coating are mixed with the coagulant agent in the first mixer 4. Furthermore, the industrial plant 12 comprises a unit 5 for dosing the flocculant agent. The flocculant agent and the agglomerates obtained in the first mixer 4 are mixed together in a second mixer 6. A centrifuge 7 separates the flocs formed in the mixer 6 from the remainder liquid. Thus, the industrial plant 12 comprises a means 8 for evacuating the filtrate and a means 11 for recovering the diluted concentrate. Moreover, the industrial plant 12 comprises a means 9 for diluting the concentrate and a unit 10 for controlling the concentration of the concentrate.

### Example 1

In a study, the following composition "pre-coat composition" and "top-coat composition were prepared. The table 1 below details for these two compositions :
- the percentages of the main components expressed in dry weight, calculated on the dry weight of the total solid components of these components.
- the properties of dryness and viscosity.

**Table 1: composition and properties of "pre-coat composition" and "top-coat composition.**

| **Main components** | **Pre-coat composition** | **Top-coat composition** |
|---|---|---|
| CaC03 | 56% | 43% |
| Starch | 2,2% | 0,9% |
| Latex | 4,5% | 6,4% |
| Kaolin | 0% | 16,0% |
| Other minor additives | **1,3%** | 2,7 |
| **Total** | **64%** | **69** |
| | | |

| **Properties** | | |
|---|---|---|
| Percentage of dryness | 64% | **69** |
| Viscosity | 90 cp | 1400 cp |

According to the present invention, the "pre-coat composition" is the layer of coating colour that is applied on the paper as a support of the second layer of coating colour which is the top-coat composition. The top-coat composition improves the optical properties and the quality of printing of paper.

In the table 1, the dryness of respectively 64% for the pre-coat composition and 69% for the top-coat composition means that :
- in the pre-coat composition, the percentage of the weight of the dry substance (i.e. the total solid components) is 64% and the percentage of the weight of water is 36%;
- in the top-coat composition, the percentage of the weight of the dry substance (i.e. the total solid components) is 69% and the percentage of the weight of water is 31 %.

A mixture was then obtained by mixing in a ratio of 50/50 by weight the pre-coat composition and the top-coat composition.

The two following model-effluents of coating colour were obtained:
- Effluent 1: Effluent 1 was obtained by diluting the obtained mixture with water so that the total weight of solids was 1% by weight, calculated on the total weight of Effluent 1 ;
- Effluent 2: Effluent 2 was obtained by diluting the obtained mixture with water so that the total weight of solids was 2% by weight, calculated on the total weight of Effluent 2.

The mineral content was 84% by weight, calculated on the total weight of solid components for both Effluent 1 and Effluent 2.

The COD was :
- 4548 mg/L for Effluent 1;
- 4712 mg/L for Effluent 2.

The BOD5 was:
- 492 mg/L for Effluent 1;
- 969 mg/L for Effluent 2.

The above detailed model-effluents are representative effluents of coating colours that are used in paper industry.

The method of treatment of the present invention was carried out on the above described Effluent 1 and Effluent 2. The table 2 below details the parameters of the method of the treatment that were used and the properties of the filtrate and the concentrate recovered.

**Table 2 : Parameters of the method of treatment and properties of the filtrate and the concentrate.**

| | **Effluent 1** | **Effluent 2** |
|---|---|---|
| Flow of the decanter (L/h) | 1000 | 1000 |
| Debit of the coagulant agent (m L/L) | 0,5 | 5 |
| Debit of the flocculant agent | 0 | 10 |
| | | |

| **Filtrate** | | |
|---|---|---|
| Percentage by weight of solid components calculated on total weight of the filtrate | 0,2 | 0,1 |
| COD (mg/L) | 387 | 418 |
| BOD (mg/L) | 8,5% | 6,8% |
| BOD5 (mg/L) | 59 | 126 |
| | | |

| **Concentrate** | | |
|---|---|---|
| Percentage of dryness | 30,6 | 36,5 |
| Percentages of inorganic components | 87,4 | 87,5 |
| Percentages of organic components | 12,6 | 12,5 |
| Viscosity (mPa.s) | 1400 | 1700 |

The concentrates obtained from respectively from Effluent 1 and Effluent 2 were then re-diluted so that to obtain a concentration of total solid components between 25 and 30% by weight, calculated on the total weight of the obtained rediluted concentrate. This concentration is appropriate for reincorporating the rediluted concentrate into a fresh coating colour of paper-making process. Indeed, the redilution of the concentrate improves the dispersion of the solid components.

The properties of the obtained coating colour prepared by adding the rediluted concentrate recovered from the effluents of coating with the method of treatment according to the invention were compared with the properties of "standard" coating colour, i.e. prepared without any effluents of coating.

The table 3 below details the formulations, expressed in parts of dry weight, of :
a) a standard pre-coat composition (i.e. in table 3 below "standard pre-coat");
b) a first pre-coat composition prepared with recovered concentrate from the above described effluent 1 (i.e. in table 3 below "1^{st} effluent pre-coat") ;
c) a second pre-coat composition prepared with recovered concentrate from from the above described effluent 2 (i.e. in table 3 below "2^{nd} effluent pre-coat") ;
d) a standard top-coat composition (i.e. in table 3 below "standard top-coat") ;
e) a top-coat composition prepared with recovered concentrate from the above described effluent 2 (i.e. in table 3 below "2^{nd} effluent top-coat").

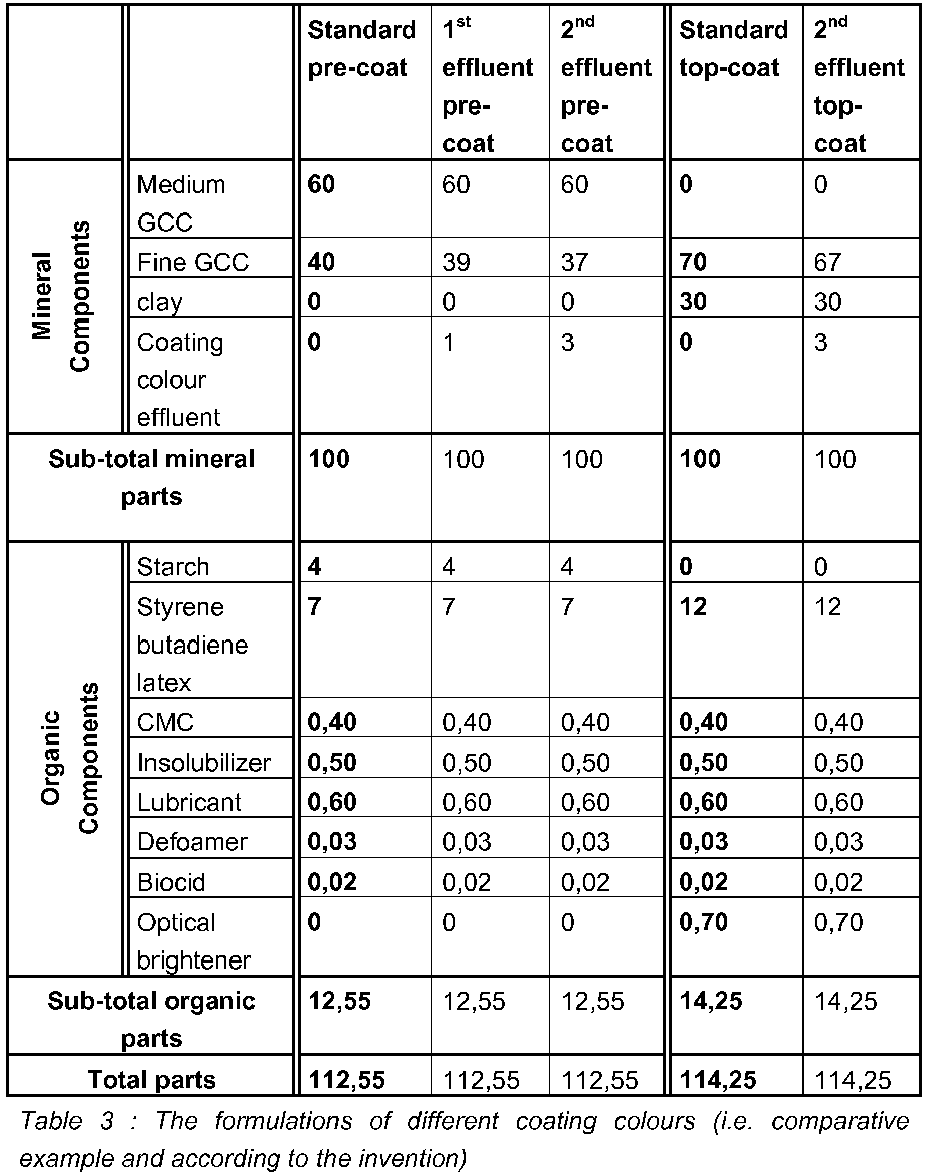

In the table 3 above :
- "GCC" is the abbreviation of "Ground Calcium Carbonate".
- « Medium GCC » means a particular size distribution in which 75% of the particles have a diameter less than 2µm.
- « Fine GCC » means a particular size distribution in which 95% of the particles have a diameter less than 2µm.
- "CMC" is the abbreviation of "Carboxy Methyl Cellulose".

No particular problem occurred with the "effluent pre-coat" composition and the "effluent top-coat" composition which were obtained by adding concentrate recovered from the effluents 1 and 2 of coating.

Moreover, no deposit occurred after filtration with a filter of 100 µm of these effluent "pre-coat" and "effluent top-coat" compositions.

Tests of rheology were performed on the 1^{st} effluent pre-coat and 2^{nd} effluent pre-coat compositions and were compared with the results of the standard pre-coat composition. The graph of figure 2 shows the viscosity in function of shear stress from 0 to 3000 s⁻¹ and from 3000 s⁻¹ to 0. The graph of figure 2 details the rheological behaviour of the 1st effluent pre-coat and 2nd effluent pre-coat compositions in comparison with. In view of the graph of figure 2, said rheological behaviour is called thixotropic behaviour and is very typical of coating colour composition. Indeed, after the carrying out of high shear stress, the tested coating colour compositions do not retrive the iniatial values of viscosity.

Tests of rheology were performed on the effluent top-coat composition and were compared with the result of standard top-coat. The graph of figure 3 shows the viscosity as a function of shear stress. The graph of figure 3 shows the viscosity in function of shear stress from 0 to 3000 s⁻¹ and from 3000 s⁻¹ to 0. The graph of figure 3 details the rheological behaviour of effluent top-coat composition in comparison with the rheological behaviour of standard top-coat. In view of the graph of figure 2, said rheological behaviour is called thixotropic behaviour and is very typical of coating colour composition. Indeed, after the carrying out of high shear stress, the tested coating colour compositions do not retrive the iniatial values of viscosity.

It can be concluded from the above detailed results of tests of rheology that the adding of concentrate of effluents of coating into a fresh coating colour does not induce any modification of the rheological properties of the obtained coating colour in comparison with "standard" coating colour.

Moreover, the table 4 below details the properties the above described pre-coat and top-coat compositions.

**Table 4 : Properties of the different pre-coat and top-coat compositions.**

| | **Standard pre-coat** | **1^{st} effluent pre-coat** | **2^{nd} effluent pre-coat** | **Standard top-coat** | **effluent top-coat** |
|---|---|---|---|---|---|
| **Solid content (%)** | 57,0 | 56,7 | 56,8 | 61,0 | 60,8 |
| **Brookfield viscosity (mPa.s)** | 110 | 95 | 100 | 270 | 230 |
| **pH** | 8,2 | 8,2 | 8,2 | 8,3 | 8,3 |
| **Water retention (s)** | 18 | 20 | 21 | 29 | 31 |
| **Temperature (°C)** | 19 | 19 | 19 | 19 | 19 |

The viscosity was measured with a Brookfield viscosmeter of type LV, i.e. low viscosity, at a rate of 100 rpm.

The above mentioned retention of water is an analysis of retention of water of a coating colour that is typically used in paper-industry.

The analysis was carried out as follows:
- A square of 15x15 mm of filter paper Wattmann n°1 was cut; said paper has a smooth face and a rough face;
- Potassium permanganate (of violet color) was put on the rough face with a brush;
- The coating colour to be tested was put in a cup;
- The smooth face of the filter paper was put into contact with the coating colour and a chronometer was started;
- The coating colour migrated on the filter paper
- The chronometer was stopped when the change of color of potassium permanganate was observed (i.e. from violet to orange);
- The measured time corresponded to the retention time of the coating colour to be tested.

The results of the table 4 show that there is no particular influence of the coating effluents on the Brookfield viscosity and rheology measurements.

Whatever the coating colour fomulations used (pre-coat or top-coat), the results detailed in the table 4 show :
- there is no impact of coating effluents on the rheological behaviour,
- there is no impact of the coating effluents on the viscosity,
- there is no impact of the coating effluents on the pH and on the water retention.

## Claims

1. Method of treatment of the effluents produced during the process of coating in paper-making industry, said effluents containing diluted coating colour which comprises an aqueous suspension of mineral and organic solid components, said method is **characterized in that** it comprises the following steps:
a) mixing of the effluents of coating with at least one coagulant agent which is a polymer chosen in the group constituted by the polyaluminium chlorides until obtaining by coagulation a mixture which comprises agglomerates ;
b) performing a separation treatment on the mixture obtained in step a) to recover :
- a concentrate containing the mineral and organic solid components that were present in the coating colour ;
- a filtrate.

2. Method of treatment according to claim 1, wherein before the step b) of performing a separation treatment, a further step a') is carried out, said step a') consists in mixing the mixture containing the agglomerates formed in step a) with at least one flocculant agent which is a polymer chosen in the group constituted by the polyvinylamines until obtaining by flocculation a mixture which comprises flocs.

3. Method of treatment according to claim 1 or claim 2, wherein the aqueous suspension of coating colour has a total content of inorganic and organic solid components that is less than 10%, preferably in the range of 0,5 to 5% by weight, calculated on the total weight of the mineral and organic solid components of the effluents of coating.

4. Method of treatment according any one of claims 1 to 3, wherein the quantity of the coagulant agent is comprised between 1% and 3% of the total weight, calculated on the total weight of the mineral and organic solid components of the effluents of coating.

5. Method of treatment according to any one of claims 2 to 4, wherein the quantity of the flocculant agent is comprised between 0,5% and 1% by weight, calculated on the total weight of the mineral and organic solid components of the effluents of coating.

6. Method of treatment according to any one of claims 1 to 5, wherein step b) is carried out in a centrifuge, preferably at a speed between 1500 and 3500 rotation per minute.

7. Use of the concentrate recovered in step b) of the method of treatment according to any one of claims 1 to 6 for paper-making process.

8. Use according to claim 7, wherein the paper-making process is coating.

9. Industrial plant (12) for carrying out the method of treatment according to any one of claims 1 to 6, wherein the industrial plant (12) comprises:
- a first unit (3) for dosing the coagulant agent;
- a second unit (1) for controlling the concentration of effluents of coating ;
- a first mixer (4) for mixing the effluents of coating with the coagulant agent to obtain a mixture;
- optionally, a third unit (5) for dosing the flocculant agent;
- optionally, a second mixer (6) for mixing the flocculant agent with the mixture;
- a means of separation (7) for recovering the concentrate and the filtrate.
